# EUROPÄISCHE PATENTSCHRIFT

(11) **EP 2 081 169 B1**
(45) Veröffentlichungstag und Bekanntmachung des Hinweises auf die Patenterteilung: **15.09.2010**
(21) Anmeldenummer: 08105759.8
(22) Anmeldetag: 11.11.2008
(51) Int. Cl.: G08G 1/16, G05D 1/02

(54) **Fahrerassistenzsystem mit Schätzmodul für Kursversatz**
Driver assist system with estimation module for course displacement
Système d'assistance du conducteur doté d'un module estimation pour écart de route

(30) Priorität: 21.01.2008 DE 102008005316
(43) Veröffentlichungstag der Anmeldung: 22.07.2009
(73) Patentinhaber: ROBERT BOSCH GMBH, 70442 Stuttgart (DE)
(72) Erfinder: Jordan, Ruediger, 70192 Stuttgart (DE); Schwindt, Oliver, 48331 Farmington Hills (DE)

(56) Entgegenhaltungen:
- DE-A1- 10 118 265
- DE-A1- 19 637 245
- DE-A1- 19 855 400

## Beschreibung

### Stand der Technik

Die Erfindung betrifft ein Fahrerassistenzsystem für Kraftfahrzeuge, mit einem Umfeldsensor zur Ortung von Objekten im Vorfeld des Fahrzeugs und mit einem Datenverarbeitungssystem mit einem Schätzmodul zur Schätzung eines Kursversatzes eines georteten Objekts auf der Grundlage von Eingangssignalen, und mindestes einem Funktionsmodul zur Ausführung einer Assistenzfunktion unter Berücksichtigung des geschätzten Kursversatzes.

Ein derartiges System ist beispielsweise aus der DE19855400 A1 bekannt.

Beispiele für Fahrerassistenzsysteme, in denen die Erfindung Anwendung findet, sind etwa sogenannte ACC-Systeme (Adaptive Cruise Control), die eine automatische Regelung des Abstands zu einem vorausfahrenden Fahrzeug (dem Objekt) erlauben, sowie prädiktive Sicherheitssysteme (PSS), die dazu dienen, eine unmittelbar bevorstehende Kollision automatisch zu erkennen, so daß Maßnahmen zur Abwendung der Kollision oder zur Milderung der Kollisionsrolgen eingeleitet werden können.

Als Umfeldsensor wird in solchen Fahrerassistenzsystemen zumeist ein langreichweitiger Radarsensor (LRR; Lang Range Radar) eingesetzt, mit dem nicht nur der Abstand und die Relativgeschwindigkeit des Objekts, sondern auch dessen Azimutwinkel gemessen werden kann, so daß sich die Position des Objekts in einem zweidimensionalen Koordinatensystem berechnen läßt.

Bei den oben als Beispiel genannten Assistenzfunktionen ist eine möglichst genaue Schätzung des Kursversatzes eines Objekts erforderlich, damit sich beispielsweise entscheiden läßt, ob ein als Objekt geortetes vorausfahrendes Fahrzeug sich auf der von dem eigenen Fahrzeug befahrenen Spur oder auf einer Nebenspur befindet. Fehleinschätzungen können zu Fehlreaktionen des Systems führen, die den Nutzer des Assistenzsystems irritieren oder sogar eine Gefahrenquelle darstellen.

Üblicherweise wird zur Schätzung des Kursversatzes der voraussichtliche Kurs des eigenen Fahrzeugs geschätzt, so daß sich die laterale Ablage des Objekts von diesem Kurs am Ort des Objekts berechnen läßt. Die Kursschätzung beruht in erster Linie auf dynamischen Daten über das eigene Fahrzeug, insbesondere über dessen (linearer) Eigengeschwindigkeit und Giergeschwindigkeit; ggf. auch auf höheren zeitlichen Ableitungen dieser Größen, der Querbeschleunigung, etc..

Alle Eingangssignale, die in diesem Zusammenhang ausgewertet werden, sind mit mehr oder weniger großen statistischen Meßfehlern und unter Umständen auch mit systematischen Meßfehlern behaftet, die die Genauigkeit der Schätzung des Kursversatzes beeinträchtigen. Beispielsweise führt eine Fehljustierung des Umfeldsensors zu einem permanenten systematischen Fehler bei der Messung des Azimutwinkels des Objekts. Abhängig von der aktuellen Querbeschleunigung des eigenen Fahrzeugs kann ein systematischer Fehler bei der Kursschätzung auch durch den bei Kurvenfahrten auftretenden Schwimmwinkel des eigenen Fahrzeugs verursacht werden.

In bekannten Fahrerassistenzsystemen wird versucht, auch solche systematischen Fehler so weit wie möglich abzuschätzen und zu berücksichtigen. Das setzt jedoch eine genaue Kenntnis der physikalischen Zusammenhänge voraus, die den systematischen Fehler verursachen.

Zur Korrektur einer Fehljustierung des Umfeldsensors ist auch bereits vorgeschlagen worden, die von diesem Sensor gemessenen Objektazimutwinkel statistisch auszuwerten. Bei hinreichend großem Stichprobenumfang läßt sich der Fehljustagewinkel des Sensors aus der Asymmetrie der Häufigkeiten der gemessenen Azimutwinkel berechnen.

### Offenbarung der Erfindung

Aufgabe der Erfindung ist es, ein Fahrerassistenzsystem der eingangs genannten Art zu schaffen, mit dem sich der Kursversatz eines Objekts genauer und zuverlässiger abschätzen läßt.

Diese Aufgabe wird erfindungsgemäß dadurch gelöst, daß das Datenverarbeitungssystem eine Datenbasis aufweist, in der ein empirischer Zusammenhang zwischen mehreren gemessenen Eingangsgrößen und dem Kursversatz gespeichert ist, und daß das Datenverarbeitungssystem dazu ausgebildet ist, den Kursversatz anhand dieser Datenbasis zu schätzen.

Der Grundgedanke dieser Lösung besteht darin, daß das Unwissen über die physikalischen Zusammenhänge bezüglich der Eingangsgrößen umgangen wird und statt dessen der systematische Fehler des Kursversatzes direkt als Funktion charakteristischer Eingangsgrößen geschätzt wird. Diese Funktion beschreibt den empirischen Zusammenhang zwischen den Eingangsgrößen und dem Kursversatz bzw. dem systematischen Fehler dieses Kursversatzes. Der Ausdruck "empirisch" bedeutet hier, daß die Datenbasis auf der Grundlage von Experimenten erstellt wird, in denen der Zusammenhang zwischen dem systematischen Fehler des Kursversatzes und den betreffenden Eingangsgrößen direkt gemessen wird. Dabei ist jedoch nicht ausgeschlossen, daß anstelle von Experimenten auch wirklichkeitsnahe Simulationen zum Einsatz kommen.

Die Datenbasis kann entweder zu einer direkten Schätzung des Kursversatzes benutzt werden oder zu einer Bestimmung des systematischen Fehlers und dann zur Korrektur dieses Fehlers bei dem auf herkömmliche Weise geschätzten Kursversatz. Zu diesen Zwecken steht eine Vielzahl bekannter Schätzverfahren zur Verfügung, beispielsweise Polynom-Approximation, Fuzzy-Schätzer, neuronale Netze und dergleichen.

Der wesentliche Vorteil besteht darin, daß nicht nur systematische Fehler der Meßgrößen kompensiert werden, sondern auch Fehler in den verwendeten Modellen bzw. den sie repräsentierenden Gleichungen. Damit ist es möglich, auch nicht bekannte und nicht verstandene systematische Fehler zu kompensieren.

Vorteilhafte Ausgestaltungen und Weiterbildungen der Erfindung sind in den Unteransprüchen angegeben.

In einer Ausführungsform wird die Datenbasis vor Inbetriebnahme des Fahrzeugs erstellt. Dabei kann für jeden Fahrzeugtyp, jede Software- und/oder Hardwareversion des Fahrerassistenzsystems (einschließlich des zugehörigen Umfeldsensors) oder auch für jedes individuelle Fahrerassistenzsystem - nach Einbau in das Fahrzeug - eine spezifische Datenbasis erstellt werden. Ebenso ist eine mehrstufige Vorgehensweise möglich, bei der die Datenbasis auf einem typspezifischen "Grundgerüst" basiert, das dann jeweils anhand empirischer Daten für das spezifische Fahrzeug und/oder das spezifische Fahrerassistenzsystem verfeinert wird. Dazu können beispielsweise Trainingsfahrten oder Simulationen vorgesehen sein, in denen unterschiedliche Fahrsituationen durchgespielt werden, die sich hinsichtlich des Objektabstands, des Kurvenradius, der Absolutgeschwindigkeit und dergleichen unterscheiden. Wahlweise kann dabei auch eine Referenz-Sensorik eingesetzt werden, die genauere Daten liefert als die fahrzeugeigene Sensorik.

In einer anderen Ausführungsform wird die Datenbasis mit Hilfe von Lern- oder Trainingsalgorithmen erst während des Betriebs des Fahrzeugs erstellt. Für dieses (online-) Training eignen sich insbesondere Verkehrssituationen, in denen ein unmittelbar in der eigenen Spur vorausfahrendes Fahrzeug als Zielobjekt verfolgt wird. In solchen Verkehrssituationen sind Kursversätze nach links und nach rechts gleich wahrscheinlich. Die Datenbasis kann daher nach und nach so optimiert werden, daß die Schätzwerte für den Kursversatz im langfristigen statistischen Mittel den Wert null ergeben.

Dabei ist auch eine nach Fahrsituationen getrennte statistische Auswertung möglich, so daß beispielsweise für unterschiedliche Objektabstände, Kurvenradien und dergleichen jeweils getrennte Statistiken geführt werden.

Es ist auch möglich, während einer anfänglichen Trainingsphase, in der die Datenbasis erstellt wird, einzelne oder alle Assistenzfunktionen des Fahrerassistenzsystems zu verriegeln und sie erst dann freizugeben, wenn eine hinreichend zuverlässige Datenbasis zur Verfügung steht.

Der Zusammenhang zwischen den Eingangsgrößen und dem Schätzwert für den Kursversatz bzw. den systematischen Fehler kann in der Datenbasis auf unterschiedliche Weise repräsentiert werden, beispielsweise in der Form von Polynomkoeffizienten oder ähnlichen Funktionsparametern, in der Form von Matrixkoeffizienten (falls ein linearer Zusammenhang angenommen wird), in der Form von Kopplungen zwischen den Neuronen eines neuronalen Netzes und dergleichen.

### Kurze Beschreibung der Zeichnungen

Ausführungsbeispiele der Erfindung sind in den Zeichnungen dargestellt und in der nachfolgenden Beschreibung näher erläutert.

Es zeigen:
- Fig. 1: ein Blockdiagramm eines erfindungsgemäßen Fahrerassistenzsystems;
- Fig. 2: eine Skizze zur Illustration eines Kursversatzes;
- Fig. 3: ein Blockdiagramm eines Fahrerassistenzsystems in einem Trainingsmodus; und
- Fig. 4: ein Flußdiagramm eines Trainingsverfahrens für das Fahrerassistenzsystem nach Fig. 3.

### Ausführungsformen der Erfindung

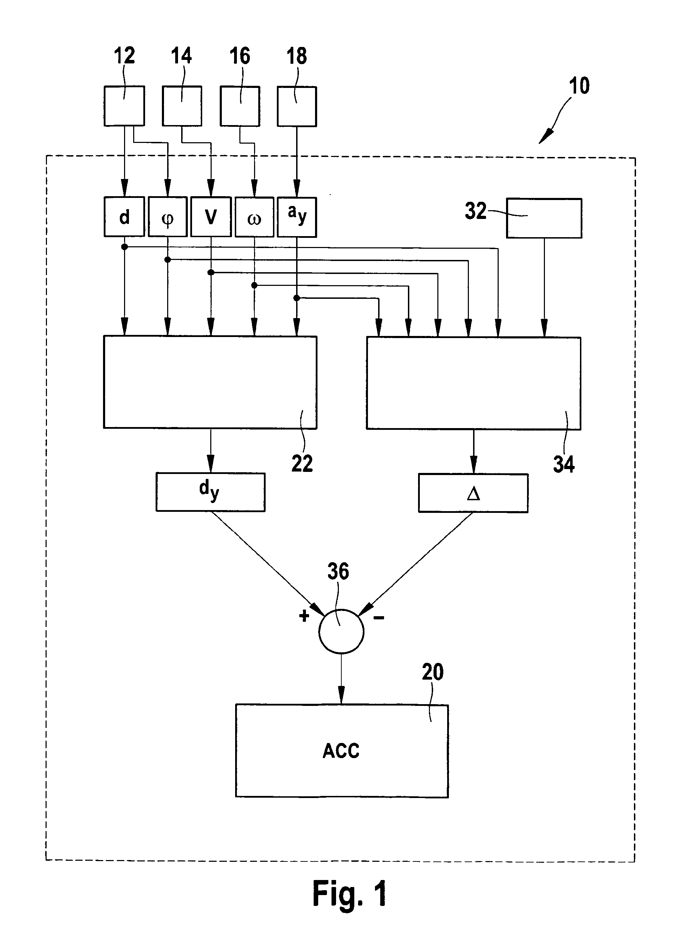

Kernstück des in Fig. 1 gezeigten Fahrerassistenzsystems ist ein elektronisches Datenverarbeitungssystem 10, das Eingangssignale von mehreren fahrzeugeigenen Sensoren verarbeitet, u.a. von einem Umfeldsensor 12, einem Eigengeschwindigkeitssensor 14, einem Giergeschwindigkeitssensor 16 und einem Querbeschleunigungssensor 18.

Bei dem Umfeldsensor 12 handelt es sich beispielsweise um einen vorn im Fahrzeug eingebauten Radarsensor, der neben der Relativgeschwindigkeit auch den Abstand d und den Azimutwinkel ϕ jedes georteten Objekts mißt. Der Eigengeschwindigkeitssensor 14 mißt die Eigengeschwindigkeit V des mit dem Fahrerassistenzsystem ausgerüsteten Fahrzeugs. Der Giergeschwindigkeitssensor 16 mißt die Giergeschwindigkeit ω dieses Fahrzeugs. Der Querbeschleunigungssensor 18 mißt die Querbeschleunigung a_{y} des eigenen Fahrzeugs. All diese Meßgrößen werden digitalisiert und dem Datenverarbeitungssystem 10 als Eingangsgrößen zur Verfügung gestellt.

Das Datenverarbeitungssystem 10 ist dazu eingerichtet und programmiert, mindestens eine Assistenzfunktion 20 auszuführen, beispielsweise eine Abstandsregelung (ACC) auf ein vom Umfeldsensor 12 geortetes, unmittelbar in der eigenen Spur vorausfahrendes Fahrzeug, das sogenannte Zielobjekt. Im Rahmen der Assistenzfunktion kann das Datenverarbeitungssystem 10 neben den oben genannten Eingangsgrößen auch noch andere Daten, insbesondere die Relativgeschwindigkeit des Zielobjekts, in bekannter Weise verarbeiten, doch braucht darauf im Zusammenhang mit der hier erläuterten Erfindung nicht näher eingegangen zu werden.

Für die Ausführung der ACC Funktion ist es aber wichtig zu entscheiden, ob ein geortetes Fahrzeug sich in der von dem eigenen Fahrzeug befahrenen Spur befindet und somit als Zielobjekt in Frage kommt, oder ob sich dieses Objekt auf einer Nebenspur befindet und somit (zumindest vorerst) nicht das Zielobjekt für die Abstandsregelung bildet. Für diese Entscheidung weist das Datenverarbeitungssystem 10 ein durch geeignete Software und/oder Hardware gebildetes Schätzmodul 22 auf, das den Kursversatz d_{y} zwischen dem georteten Objekt und dem voraussichtlichen Kurs des eigenen Fahrzeugs schätzt.

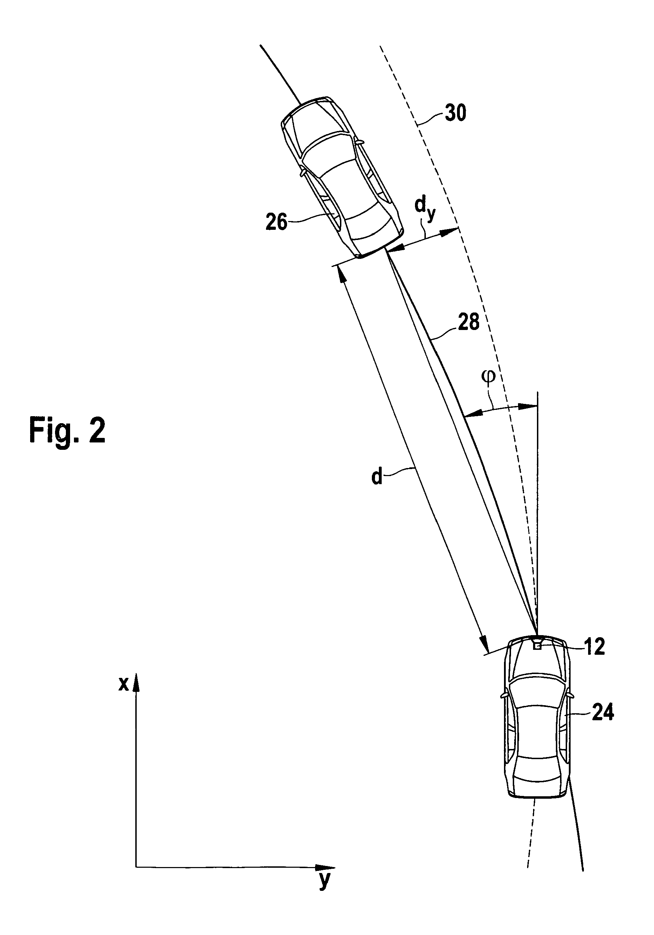

Dieser Kursversatz d_{y} wird in Fig. 2 anhand einer Skizze illustriert. Hier sind im Grundriß das eigene, mit dem Fahrerassistenzsystem ausgerüstete Fahrzeug 24 und ein vom Umfeldsensor 12 geortetes Objekt 26 gezeigt. Bei dem Objekt 26 handelt es sich um ein vorausfahrendes Fahrzeug, für das entschieden werden muß, ob es als Zielobjekt für die Abstandsregelung in Frage kommt oder nicht. Die Position des Objekts 26 in einem zweidimensionalen kartesischen Koordinatensystem mit den Achsen x und y (x längs der momentanen Fahrtrichtung des eigenen Fahrzeugs 24) läßt sich aus dem für das Objekt 26 gemessenen Abstand d und dem Azimutwinkel ϕ berechnen. Bekanntlich werden bei einem ACC System die Ortungsdaten des Objekts 26 in einer sogenannten Tracking-Prozedur über aufeinanderfolgende Meßzyklen des Umfeldsensors 12 hinweg verfolgt, so daß sich in dem x-y-Koordinatensystem auch die historische Trajektorie 28 des Objekts 26 eintragen läßt.

Aus der Giergeschwindigkeit ω und der Eigengeschwindigkeit V oder wahlweise auch aus der Eigengeschwindigkeit V und der Querbeschleunigung a_{y} des eigenen Fahrzeugs 24 läßt sich die aktuelle Kurskrümmung des von dem Fahrzeug 24 befahrenen Kurses berechnen, und damit läßt sich unter der Annahme konstanter Krümmung der voraussichtliche Kurs 30 dieses Fahrzeugs schätzen und in das Koordinatensystem eintragen.

Der Kursversatz d_{y} ist dann der rechtwinklig zur Verbindungsgeraden zwischen dem Fahrzeug 24 und dem Objekt 26 gemessene Abstand zwischen dem Ort des Objekts 26 und dem geschätzten Kurs 30. Wenn dieser Abstand größer ist als eine typische Fahrzeugbreite, so läßt sich sagen, daß eine Kollision mit dem Objekt 26 nicht akut bevorsteht. Ist der Kursversatz d_{y} größer als die Hälfte der typischen Breite einer Fahrspur, so kann das Objekt 26 einer Nebenspur zugeordnet werden, und es läßt sich entscheiden, daß es derzeit nicht als Zielobjekt für die Abstandsregelung in Frage kommt.

Im allgemeinen wird jedoch der in der oben beschriebenen Weise vom Schätzmodul 22 erhaltene Wert für den Kursversatz d aufgrund verschiedener Einflüsse fehlerhaft sein. Fehlerquellen sind zum einen die unvermeidlichen Meßfehler der beteiligten Sensoren, die zu statistischen Schwankungen der Meßwerte führen. Diese können jedoch durch geeignete Filterung der Daten gemildert werden. Fehlerquellen sind jedoch beispielsweise auch eine Fehljustierung des Umfeldsensors 12, die zu einem systematischen Fehler bei der Messung des Azimutwinkels ϕ führt, sowie, insbesondere bei Kurvenfahrten, eine fehlerhafte Schätzung des Schwimmwinkels des Fahrzeugs 24, d.h., der Winkelabweichung zwischen der Richtung der Koordinatenachse x (die im Idealfall mit der optischen Achse des Umfeldsensors 12 übereinstimmt) und der durch die Orientierung der Laufflächen der Reifen des Fahrzeugs 24 angegebenen Richtung, in die sich das Fahrzeug 24 in diesem Augenblick tatsächlich fortbewegt.

In ähnlicher Weise können auch die übrigen Eingangsgrößen je nach Verkehrssituation mit mehr oder weniger großen systematischen Fehlern behaftet sein. Weitere Fehlerquellen sind Fehler in den Gleichungen, die das dynamische Verhalten des Fahrzeugs 24 und des Objekts 26 beschreiben und zur Berechnung des Schätzwertes für den Kursversatz d_{y} dienen, sowie diesen Gleichungen zugrundeliegende Näherungen, die in der Praxis je nach Verkehrssituation nur mehr weniger genau erfüllt sein werden.

Wenn man nun beispielsweise mit Hilfe einer geeigneten Meßapparatur den tatsächlichen Kurs des Fahrzeugs 24 in dem x-y-Koordinatensystem verfolgt und dann zu verschiedenen Zeitpunkten den vom Schätzmodul 22 errechneten Kursversatz mit dem tatsächlichen Kursversatz vergleicht, so wird man mehr oder weniger große Abweichungen feststellen.

Das in Fig. 1 gezeigte Fahrerassistenzsystem weist deshalb eine Datenbasis 32 auf, in der empirische Daten gespeichert sind, die die Abweichung Δ zwischen dem geschätzten Kursversatz und dem tatsächlichen Kursversatz als Funktion einer geeigneten Auswahl von Eingangsgrößen angeben. Im gezeigten Beispiel werden dieselben Eingangsgrößen verwendet, die auch vom Schätzmodul 22 ausgewertet werden, doch könnte für die Erstellung der Datenbasis 32 auch eine größere oder kleinere Auswahl von Eingangsgrößen verwendet werden, sofern diese Eingangsgrößen später beim Betrieb des Fahrzeugs 24 in irgendeiner Form dem Datenverarbeitungssystem 10 zur Verfügung stehen.

Wenn man beispielsweise annimmt, daß die Abweichung Δ eine lineare Funktion der Eingangsgrößen d, ϕ, V, ω und a_{y} ist, so bestünde die Datenbasis 32 aus den gespeicherten Koeffizienten einer 1x5-Matrix, die diese lineare Funktion beschreibt. Alternativ läßt sich der Zusammenhang zwischen den Eingangsgrößen und der Abweichung Δ auch als Polynomfunktion der Eingangsgrößen beschreiben. In dem Fall enthielte die Datenbasis 32 die Polynomkoeffizienten. In jedem Fall sind diese Koeffizienten vorab empirisch bestimmt worden, so daß sie während des Betriebs des Fahrerassistenzsystems in der Datenbasis 32 zur Verfügung stehen. Ein Korrekturmodul 34 berechnet dann anhand der Eingangsgrößen d, ϕ, V, ω und a_{y} und der durch die Datenbasis 32 spezifizierten Funktion die Abweichung Δ zwischen dem vom Schätzmodul 22 geschätzten Kursversatz und dem "tatsächlichen" Kursversatz. Auch diese Abweichung Δ ist naturgemäß nur ein Schätzwert, der aber aufgrund der in der Datenbasis 32 gespeicherten Informationen Fehlerquellen verschiedenster Art, selbst unbekannte Fehlerquellen, berücksichtigt, einschließlich etwaiger systematischer Meßfehler in den beteiligten Eingangsgrößen.

In einer arithmetischen Einheit 36 wird dann die Abweichung Δ von den vom Schätzmodul 22 berechneten Schätzwert für den Kursversatz d_{y} subtrahiert, so daß ein wesentlich genauerer und verläßlicher Schätzwert an das eigentliche Funktionsmodul 20 übergeben werden kann.

Um statistische Fluktuationen zu Eingangsgrößen auszugleichen, kann im Korrekturmodul 34 wahlweise auch eine zeitliche Filterung dieser Eingangsgrößen und/oder der daraus berechneten Abweichung Δ stattfinden.

Die Korrektur des Schätzwertes für den Kursversatz kann ständig durchgeführt werden oder nur bei Vorliegen bestimmter Bedingungen. Beispielsweise wird in einer Ausführungsform das Korrekturmodul 34 nur dann aktiviert, wenn das eigene Fahrzeug 24 die historische Trajektorie des Objekts 26 überfährt (wodurch das Objekt eindeutig als Zielobjekt identifizierbar ist) und dann der vom Schätzmodul 22 gelieferte Kursversatz d dem Betrage nach größer ist als ein bestimmter Schwellenwert.

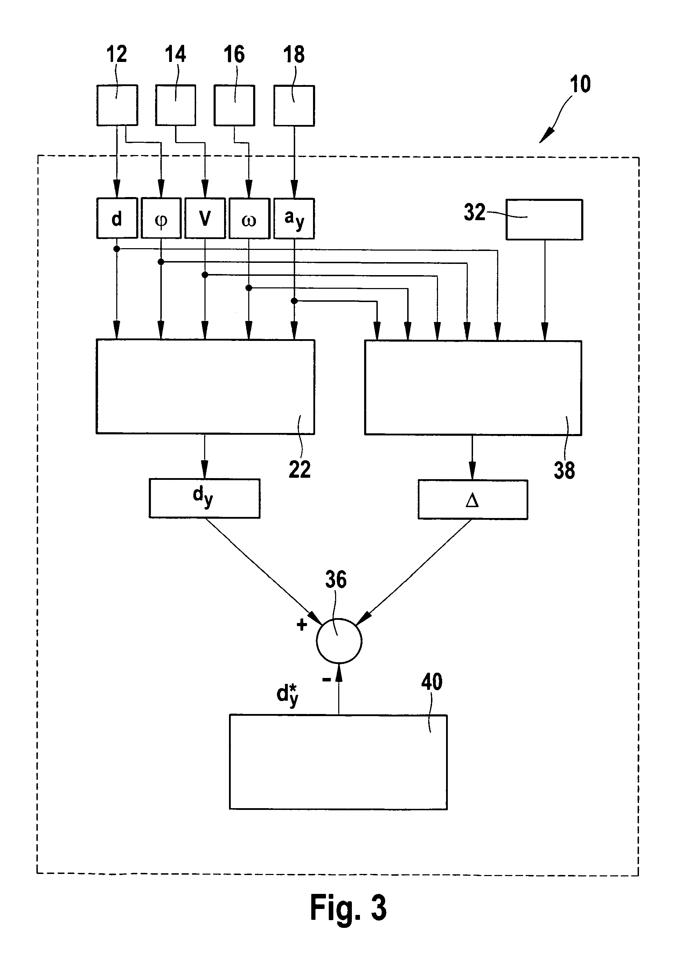

Fig. 3 zeigt ein Blockdiagramm für die Funktion des Fahrerassistenzsystems während einer Trainingsphase, in der die Datenbasis 32 erstellt wird. Die Funktion des Korrekturmoduls 34 ist dann ersetzt durch die Funktion eines Trainingsmoduls 38, das dazu dient, die in der Datenbasis 32 gespeicherten Koeffizienten oder Parameter nach und nach zu optimieren. Das Funktionsmodul 20 ist ersetzt durch eine Referenz-Sensorik 40, die ggf. auch außerhalb des Fahrzeugs 24 installierte sensorische Komponenten enthalten kann und die den tatsächlichen * Kursversatz d mißt. Die arithmetische Einheit 36 subtrahiert dann den tatsächlichen Wert von dem geschätzten Kursversatz d und übergibt die so errechnete Abweichung Δ an das Trainingsmodul 38.

Im Trainingsmodul 38 werden dann mit Hilfe von bekannten mathematischen Verfahren die Parameter oder Koeffizienten, die die Datenbasis 32 repräsentieren, so variiert, daß die dadurch definierte Funktion nach Einsetzen der Eingangsgrößen die Abweichung Δ ergibt.

Wenn die Datenbasis 34 durch Polynomkoeffizienten gebildet wird, so lassen sich diese beispielsweise auch durch einen "evolutionären" Algorithmus optimieren, bei dem kleine Veränderungen nach dem Zufallsprinzip vorgenommen werden und jeweils nur die Veränderungen beibehalten werden, die zu einer besseren Übereinstimmung zwischen der berechneten Abweichung Δ und der gemessenen Abweichung führen, während Veränderungen, die zu einer Verschlechterung führen, verworfen werden.

In einer modifizierten Ausführungsform kann das Trainingsmodul 38 auch während des Betriebs des mit dem Fahrerassistenzsystem ausgerüsteten Fahrzeugs 24 und sogar während des Betriebs des Funktionsmoduls aktiv sein. Da Referenzmessungen dann im allgemeinen nicht möglich sein werden, entfällt die Referenz-Sensorik 40, und im Trainingsmodul 38 wird für die Bestimmung der Datenbasis das Kriterium benutzt, daß die korrigierten Kursversätze d - Δ im zeitliche Mittel gegen null konvergieren müssen Dahinter steht die Überlegung, daß sich die realen Kursversätze nach rechts und nach links bei langfristiger Mittelung gegenseitig aufheben werden. Insbesondere gilt dies in Situationen, in denen ein in der eigenen Spur vorausfahrendes Fahrzeug als Zielobjekt verfolgt wird.

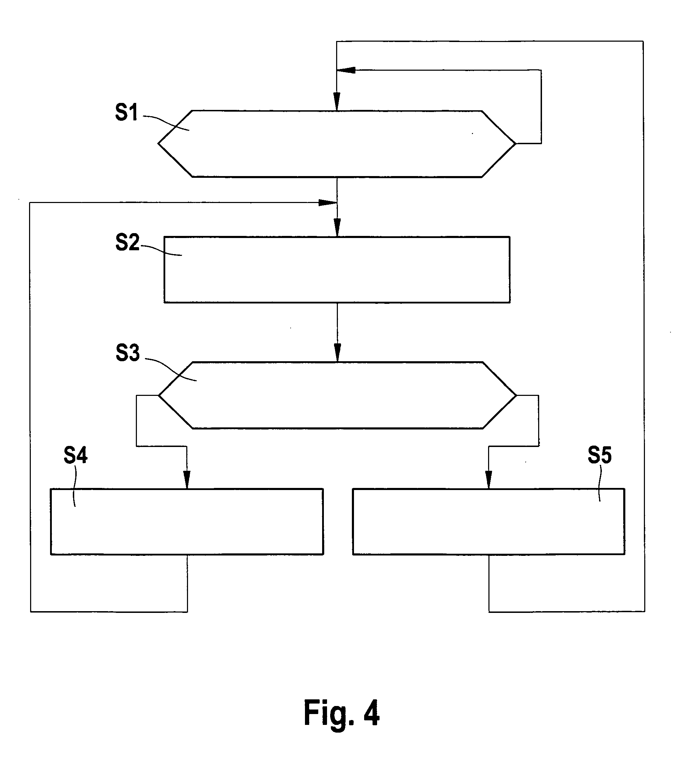

Die wesentliche Schritte des in diesem Fall angewandten Trainingsverfahrens sind in Fig. 4 als Flußdiagramm dargestellt.

In Schritt S1 wird geprüft, ob ein Objekt geortet und als Zielobjekt ausgewählt wurde. Wenn dies nicht der Fall ist, wird der Schritt so lange wiederholt, bis ein Zielobjekt ausgewählt ist. In Schritt S2 werden dann die in den aufeinanderfolgenden Meßzyklen erhaltenen Eingangsgrößen aufgezeichnet und gespeichert. Nach einer gewissen Aufzeichnungszeit wird in Schritt S3 geprüft, ob das Zielobjekt noch vorhanden ist. Wenn das der Fall ist (J) wird in Schritt S4 die Datenbasis auf der Grundlage der in Schritt S2 aufgezeichneten Eingangsgrößen optimiert und, es erfolgt dann ein Rücksprung zu Schritt S2, so daß ein neuer Aufzeichnungs- und Optimierungszyklus beginnen kann. Wird in dagegen in Schritt S3 festgestellt, daß das Zielobjekt inzwischen verlorengegangen ist, etwa an einer Autobahnausfahrt nach rechts abgefahren ist, so werden in Schritt S5 die aufgezeichneten Eingangsgrößen gelöscht, und es erfolgt ein Rücksprung zu Schritt S1.

Dieses Verfahren stellt sicher, daß die Optimierung nur während der Verfolgung eines Zielobjekts stattfindet, wohingegen Betriebsphasen, in denen man nicht sicher sein kann, das Kursversätze nach rechts und nach links gleich häufig sind und sich im Mittel aufheben, auf die Datenbasis keinen Einfluß haben.

Bei den hier gezeigten Ausführungsbeispielen erfolgt im Schätzmodul 22 eine Schätzung des Kursversatzes nach herkömmlichen Verfahren, und die Datenbasis 32 und das Korrekturmodul 34 dienen lediglich zur Berechnung einer Abweichung Δ zur Korrektur des Schätzwertes. In einer modifizierten Ausführungsform kann jedoch auf das Schätzmodul 22 verzichtet werden und der Kursversatz direkt anhand der Datenbasis und der Eingangsgrößen geschätzt werden.

## Patentansprüche

1. Fahrerassistenzsystem für Kraftfahrzeuge (24), mit einem Umfeldsensor (12) zur Ortung von Objekten (26) im Vorfeld des Fahrzeugs und mit einem Datenverarbeitungssystem (10) mit einem Schätzmodul (22, 34) zur Schätzung eines Kursversatzes (d_{y}) eines georteten Objekts (26) auf der Grundlage von Eingangssignalen, und mindestens einem Funktionsmodul (20) zur Ausführung einer Assistenzfunktion unter Berücksichtigung des geschätzten Kursversatzes, **dadurch gekennzeichnet, daß** das Datenverarbeitungssystem (10) eine Datenbasis (32) aufweist, in der ein empirischer Zusammenhang zwischen mehreren gemessenen Eingangsgrößen (d, ϕ, V, ω, a_{y}) und dem Kursversatz (d_{y}) gespeichert ist, und daß das Datenverarbeitungssystem dazu ausgebildet ist, den Kursversatz anhand dieser Datenbasis (32) zu schätzen.

2. Fahrerassistenzsystem nach Anspruch 1, **dadurch gekennzeichnet, daß** das Datenverarbeitungssystem (10) neben dem Schätzmodul (22), das dazu ausgebildet ist, einen Schätzwert für den Kursversatz (d_{y}) ohne Berücksichtigung der Datenbasis (32) zu bestimmen, ein Korrekturmodul (34) aufweist, das dazu ausgebildet ist, anhand der Datenbasis (32) und der Eingangsgrößen (d, ϕ, V, ω, a_{y}) eine Abweichung (Δ) zu bestimmen, um welche der Schätzwert für den Kursversatz zu korrigieren ist.

3. Verfahren für ein Fahrerassistenzsystem nach Anspruch 1 oder 2, **dadurch gekennzeichnet, daß** die Datenbasis (32) während des Betriebs des Fahrzeugs (24) in einer Trainingsprozedur fortlaufend mit dem Ziel modifiziert wird, die Datenbasis (32) so anzupassen, daß die korrigierten Kursversätze im statistischen Mittel den Wert null annehmen.

4. Verfahren nach Anspruch 3, **dadurch gekennzeichnet, daß** die Durchführung der Trainingsprozedur auf Verkehrssituationen beschränkt ist, in denen das Objekt (26) ein unmittelbar in der eigenen Spur vorausfahrendes Fahrzeug ist, das als Zielobjekt verfolgt wird.

## Claims

1. Driver assist system for motor vehicles (24), having a surroundings sensor (12) for locating objects (26) in the area in front of the vehicle and having a data processing system (10) with an estimation module (22, 34) for estimating a course displacement (d_{y}) of a located object (26) on the basis of input signals, and at least one functioning module (20) for carrying out an assist function taking into account the estimated course displacement, **characterized in that** the data processing system (10) has a database (32) in which an empirical relationship between a plurality of measured input variables (d, ϕ, V, ω, a_{y}) and the course displacement (d_{y}) is stored, and **in that** that the data processing system is designed to estimate the course displacement on the basis of this database (32).

2. Driver assist system according to Claim 1, **characterized in that** the data processing system (10) has, in addition to the estimation module (22) which is designed to determine an estimated value for the course displacement (d_{y}) without taking into account the database (32), a correction module (34) which is designed to determine, on the basis of the database (32) and the input variables (d, φ, V, ω, ₐy), a deviation (Δ) by which the estimated value for the course displacement has to be corrected.

3. Method for a driver assist system according to Claim 1 or 2, **characterized in that** during the operation of the vehicle (24) the database (32) is continuously modified in a training procedure with the objective of adapting the database (32) in such a way that the corrected course displacements assume the value zero on a statistical average.

4. Method according to Claim 3, **characterized in that** the execution of the training procedure is limited to traffic situations in which the object (26) is a vehicle which is travelling directly ahead on the same lane and is being tracked as a target object.

## Revendications

1. Système d'assistance au conducteur pour véhicules automobiles (24), comprenant un capteur d'environnement (12) pour localiser des objets (26) à l'avant du véhicule et comprenant un système de traitement de données (10) muni d'un module d'évaluation (22, 34) pour évaluer un déport de la trajectoire (d_{y}) d'un objet localisé (26) en se basant sur des signaux d'entrée et comprenant au moins un module fonctionnel (20) pour exécuter une fonction d'assistance en tenant compte du déport évalué de la trajectoire, **caractérisé en ce que** le système de traitement de données (10) présente une base de données (32) dans laquelle est enregistrée une relation empirique entre plusieurs grandeurs d'entrée mesurées (d, ϕ, V, ω, a_{y}) et le déport de la trajectoire (d_{y}) et que le système de traitement de données est configuré pour évaluer le déport de la trajectoire au moyen de cette base de donnés (32).

2. Système d'assistance au conducteur selon la revendication 1, **caractérisé en ce que** le système de traitement de données (10), outre le module d'évaluation (22) qui est conçu pour déterminer une valeur estimée du déport de la trajectoire (d_{y}) sans tenir compte de la base de données (32), présente un module de correction (34) qui est configuré pour déterminer un écart (Δ) au moyen de la base de données (32) et des grandeurs d'entrée mesurées (d, ϕ, V, ω, a_{y}), duquel la valeur estimée du déport de la trajectoire est à corriger.

3. Procédé pour un système d'assistance au conducteur selon la revendication 1 ou 2, **caractérisé en ce que** la base de données (32) est continuellement modifiée pendant le fonctionnement du véhicule (24) dans une procédure de formation avec pour objectif d'adapter la base de données (32) de telle sorte que les déports de trajectoire corrigés aient une moyenne statistique égale à zéro.

4. Procédé selon la revendication 3, **caractérisé en ce que** la réalisation de la procédure de formation est limitée aux situations de trafic dans lesquelles l'objet (26) est un véhicule qui précède directement sur sa propre voie de circulation et qui est suivi en tant qu'objet cible.
